# EUROPÄISCHE PATENTANMELDUNG

(11) **EP 1 741 947 A1**
(43) Veröffentlichungstag der Anmeldung: **10.01.2007**
(21) Anmeldenummer: 05014864.2
(22) Anmeldetag: 08.07.2005
(51) Int. Cl.: F16D 25/12, F16D 23/12, B60T 11/16, B60T 11/236

(54) **Betätigungszylinder für eine hydraulische Kupplungsbetätigung in Kraftfahrzeugen**

(71) Anmelder: ZF FRIEDRICHSHAFEN AG, 88046 Friedrichshafen (DE)
(72) Erfinder: Frank, Markus, 97440 Werneck-Zeuzleben (DE); Knysak, Thomas, 97705 Münnerstadt (DE)

(57) **Zusammenfassung**

Es wird ein Betätigungszylinder (1) insbesondere für eine hydraulische Kupplungsbetätigung in Kraftfahrzeugen beschrieben, welcher ein einseitig, durch einen Boden geschlossenes zylinderrohrförmiges Gehäuse (2) umfasst, welches an deren Zylinderfläche mindestens ein Fenster (9) aufweist und wobei an einem Einbauort axial zwischen dem Fenster und dem Boden eine Dichtung (7) zur Anlage an der Innenumfangsfläche des Gehäuses vorgesehen ist. Zur Ermöglichung einer beschädigungsfreien Montage der Dichtung wird vorgeschlagen, dass der einer Umfangsposition der Dichtung beim Passieren des Fensters zugeordnete Fensteraustrittswandungsabschnitt mit der Dichtung einen Winkel (α) einschließt.

## Beschreibung

Die Erfindung betrifft einen Betätigungszylinder für hydraulische Kupplungsbetätigungen in Kraftfahrzeugen gemäß dem Oberbegriff des Patentanspruchs.

Mit der DE 195 16 391 A1 ist ein Zylinder für hydraulische Anlagen, insbesondere für Kraftfahrzeuge, bekannt geworden, der aus einem Gehäuse mit einer axialen Bohrung besteht, in der ein an der Kolbenstange befestigter Kolben axial verschiebbar geführt ist und auf seiner Stirnseite mit hydraulischer Flüssigkeit beaufschlagt und gegenüber dem Gehäuse abgedichtet geführt ist. Der Zylinder besteht zur einen Hälfte aus der Bohrung im Gehäuse und zur anderen Hälfte aus einer Bohrung in einer in das Gehäuse eingeschnappten Führungshülse, die Fixierungselemente aufweist und in Ausnehmungen des Gehäuses eingeschnappt ist. Die Führungshülse wird bei ihrer Montage gemeinsam mit einer Dichtung in das Gehäuse so lange eingeschoben, bis die Dichtung an einer Stirnseite zur eigentlichen Bohrung im Zylinder anschlägt und bis die Fixierungselemente in die Fenster im Gehäuse einrasten. In den Figuren lässt sich erkennen, dass der Durchmesser des Sitzes der Dichtung geringfügig kleiner ist als der Durchmesser des Sitzes der Führungshülse, wodurch bewirkt werden soll, dass die Dichtung mit den Kanten der Fenster in dem größeren Durchmesser des Sitzes der Führungshülse nicht in Kontakt kommt. Das Einführen der Führungshülse gemeinsam mit der Dichtung ist bei der Montage äußerst sorgfältig vorzunehmen. Andererseits besteht die Gefahr, dass die nach radial außen weisenden Lippen der Dichtung beim Überfahren der scharfen Kanten des Fensters Beschädigungen davontragen können, wodurch die Dichtheit des Zylinders ungünstig beeinflußt werden kann. Diese scharfen Kanten in den Fenstern entstehen dadurch, dass das spritzgegossene Kunststoffgehäuse um ein zylindrisches inneres Werkzeug gespritzt wird, wobei die Fenster an einem das innere Werkzeug umgebenden äußeren Werkzeug als Erhöhungen ausgeformt sind. Hierdurch wird ersichtlich, dass Formteilkanten am inneren Durchmesser, also am Sitz der Führungsbüchse entstehen, welche die Lippen der Dichtung bei der Montage verletzen, bspw. einschneiden können, insbesondere dann, wenn die Dichtung nicht konzentrisch mit der Führungsbüchse bei der Montage geführt wird.

Es ist somit die Aufgabe der Erfindung, einen gattungsgemäßen Betätigungszylinder zu schaffen, bei welchem die Dichtung bei deren Montage ohne Beschädigung das Fenster passieren und zu deren Einbauort gelangen kann.

Die Aufgabe wird bei einem gattungsgemäßen Zylinder durch das kennzeichnende Merkmal des Patentanspruchs gelöst.

Es wird demzufolge ein Betätigungszylinder, insbesondere für hydraulische Kupplungsbetätigungen in Kraftfahrzeugen vorgeschlagen, der ein einseitig durch einen Boden geschlossenes zylinderrohrförmiges Gehäuse umfasst, welches an deren Zylinderfläche mindestens ein Fenster aufweist und wobei an einem Einbauort axial zwischen dem Fenster und dem Gehäuseboden eine Dichtung zur Anlage an der Innenumfangsfläche des Gehäuses vorgesehen ist.

Bei der Montage der Dichtung muss von dieser das Fenster passiert werden. Dabei überfährt die Dichtung zunächst einen Fenstereintrittswandungsabschnitt, d.h. den Übergang vom Gehäuse zum Fenster. Dieser Übergang ist jedoch für die Dichtung unkritisch im Gegensatz zu einem beim Wiedereintritt in das Gehäuse gebildeten Fensteraustrittswandungsabschnitt. Die Erfinder haben erkannt, dass die Ursache für eine Beschädigung der Dichtung während der Montage in dem zu dieser parallel angeordneten Fensteraustrittswandungsabschnitt zu suchen ist, welcher einen flächigen Angriff und ein zumindest momentanes Zurückhalten der Dichtung verursacht.

Davon ausgehend wird vorgeschlagen, dass der einer Umfangsposition der Dichtung zugeordnete Fensteraustrittswandungsabschnitt mit der Dichtung einen Winkel einschließt. Somit kann sich kein großflächiger Kontakt zwischen der Dichtung und dem Fensteraustrittswandungsabschnitt ausbilden, sondern anstelle dessen lediglich ein oder mehrere, im Vergleich dazu relativ kleine Überschneidungsbereiche, welche ein kontinuierliches Eingleiten der Dichtung beim Wiedereintritt in das Gehäuse ermöglichen und wodurch im Ergebnis die Dichtung bei deren Montage das Fenster beschädigungsfrei passieren kann.

Im Folgenden wird die Erfindung beispielhaft anhand der Figuren erläutert. Es zeigen:
- Fig. 1: einen Betätigungszylinder gemäß dem Stand der Technik,
- Fig. 2: einen Teilschnitt des Gehäuses der Fig.1 im Bereich eines Fensters,
- Fig. 3: eine Draufsicht eines Gehäuses mit darin ausgebildeten Fenstern,
- Fig. 4: eine Darstellung eines Fensters in einer Ebene senkrecht zur Mittelachse des Gehäuses;
- Fig. 5: eine Projektion eines Gehäuseausschnittes mit einem Fenster gemäß der vorliegenden Erfindung.

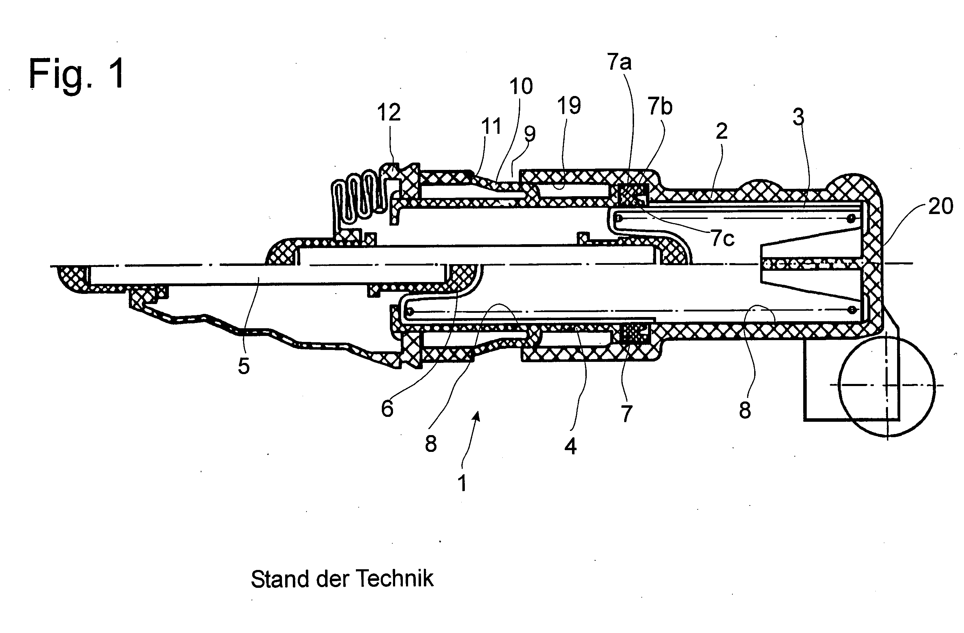

Wird in Fig. 1 mit 1 ein gemäß dem Stand der Technik ausgeführter Betätigungszylinder für eine hydraulische Kupplungsbetätigung in Kraftfahrzeugen bezeichnet, so umfasst dieser ein zylinderrohrfömiges Gehäuse 2 mit einem Boden 20, eine darin angeordnete Kolbeneinheit 3, eine fest mit dem Gehäuse 2 verbundene Führungshülse 4 und einen Druckbolzen 5 mit einem Übertragungsglied 6 zur Verschiebung der Kolbeneinheit 3, wobei die Führungshülse 4 und/oder das Gehäuse 2 die Kolbeneinheit 3 in eine Zylinderbohrung 8 führt, und wobei die Führungshülse 4 an einer koaxial zur Zylinderbohrung 8 verlaufenden Stufenbohrung 19 im Gehäuse 2 angeordnet und dort durch Schnapphaken 10 in mehreren Fenstern 9 des Gehäuses 2 fixiert ist.

Für die Abdichtung des Innenraums des Betätigungszylinders 1 sorgt eine Manschette 12 zwischen der Führungshülse 4 und dem Druckbolzen 5. Die Stufenbohrung 19 ist derart ausgebildet, dass eine als Ringlippendichtung ausgebildete Dichtung 7 erst am Ende der Stufenbohrung 19 den erforderlichen Durchmesser für deren Presssitz aufweist. In dem davorliegenden Bereich des Gehäuses 2 ist der Innendurchmesser so groß, dass die von einem Basisbereich 7a nach radial außen und radial innen abstehenden Lippen 7b, 7c der Dichtung 7 nicht mit dessen inneren Radius 25 für den Sitz der Führungshülse 4 in Berührung kommen sollen, um die äußere Lippe 7b der Dichtung 7 an den scharfen Kanten des Fensters 9 nicht zu verletzen. Die Schnapphaken 10 legen sich mit ihren nach radial außen aufgebogenen Enden gegen Anlageflächen 11 im Gehäuse 1 an und positionieren die Führungshülse 4 axial im Betätigungszylinder 1 derart, dass die Dichtung 7 eine definierte, spiellose axiale Position im Gehäuse 2 einnimmt.

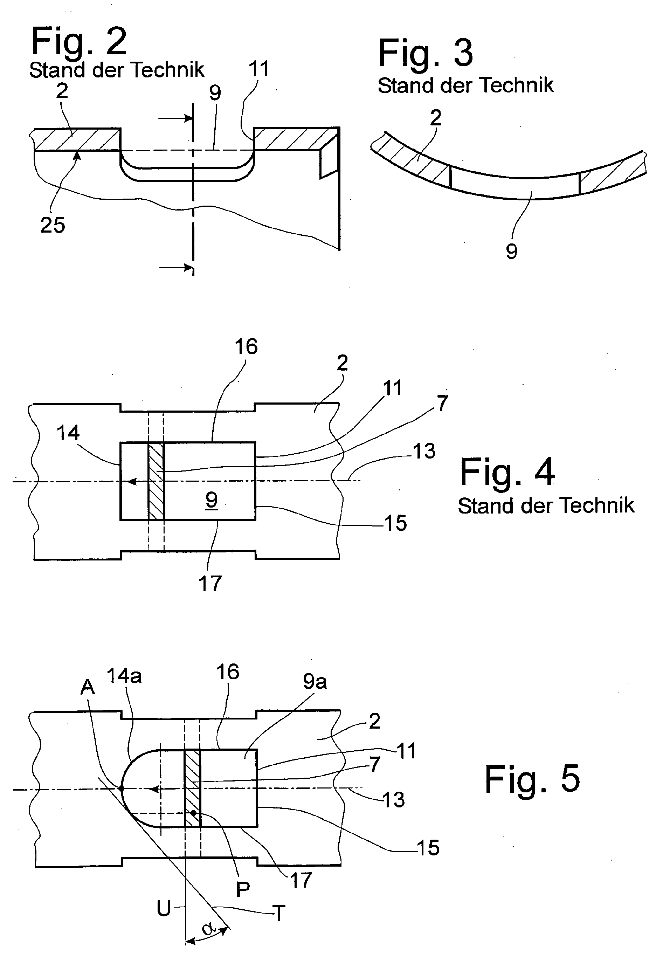

Gemäß den Fig. 2, 3 und 4 wird das Fenster 9 im Gehäuse 2 mit einer Anlagefläche 11 für den Schnapphaken 10 dargestellt, wobei am inneren Radius 25 und am äußeren Durchmesser des Gehäuses 2 jeweils eine scharfe, rundum laufende Begrenzung verläuft, welche sich aus jeweils paarweise parallel und senkrecht zur Mantellinie 13 verlaufenden Kanten 14, 15, 16, 17 ergibt. Bei der Montage der auf der Führungshülse 4 angeordneten Dichtung 7 in dem Gehäuse 2 in der mit Pfeil bezeichneten Richtung, muss die Dichtung 7 bevor diese an deren Einbauort gelangt, die Fenster 9 überfahren, wobei diese im Bereich der Kante 14 von dieser gehemmt und beschädigt werden kann. Bezüglich der Montage bildet die Kante 15 einen Fenstereintrittswandungsabschnitt und die Kante 14 einen Fensteraustrittswandungsabschnitt.

Fig. 5 zeigt ein Fenster 9a in einer Projektion mit einem gemäß der Erfindung modifizierten Fensteraustrittswandungsabschnitt 14a, der hierbei beispielhaft als Kreisbogen ausgeführt wurde und welcher bezüglich einer Position P am Umfang der Dichtung 7 mit dieser einen Winkel α einschließt, der in der Figur als Schnittwinkel der Tangente T des Fensteraustrittswandungsabschnittes bezüglich der Position P und der Umfangsrichtung U des Gehäuses 2, in der die Dichtung 7 verläüft, ersichtlich ist. Der in Umfangsrichtung am Gehäuse 2 verlaufende Fenstereintrittswandungsabschnitt 15 gemäß Fig. 3 wurde beibehalten, ebenso, jedoch verkürzt, die zur Mantellinie 13 parallelen Kanten 16, 17.

Da sich die Dichtung 7 und der Fensteraustrittswandungsabschnitt 14a bis auf einen Punkt A unter einem, sich in diesem Fall beim Eingleiten ändernden Winkel, schneiden, bilden sich in diesem Fall lediglich zwei, im Vergleich zur Fig. 4 relativ kleine Überschneidungsbereiche, welche ein kontinuierliches Eingleiten der Dichtung 7 beim Wiedereintritt in das Gehäuse 2 ermöglichen und wodurch im Ergebnis die Dichtung 7 bei deren Montage das Fenster 9a beschädigungsfrei passieren kann.

Bei dieser Gestaltung des Fensteraustrittswandungsabschnitts 14a ergibt sich lediglich für den auf der Mantellinie liegenden Punkt A eine parallel zur Dichtung 7 verlaufende Tangente, die praktisch jedoch nicht zur Geltung kommt und das Eingleiten der Dichtung 7 in das Gehäuse 2 nicht behindern kann. Durch die Veränderung der Fensterkontur muss auch die Eingriffkontur der Schnapphaken 10 angepasst werden, was jedoch ohne Aufwand erfolgen kann.

Selbstverständlich sind zur Gestaltung des Fensteraustrittswandungsabschnitts 14a gemäß dem Grundgedanken der Erfindung zahlreiche Konturen denkbar. Beispielsweise kann das Fenster auch als Kreisausschnitt oder als Dreieck ausgebildet sein, dessen Basis den Fenstereintrittswandungsabschnitt 15 bildet. Eine Abhilfe zu der eingangs geschilderten Problematik kann auch bereits erzielt werden, indem der Fensteraustrittswandungsabschnitt 14 in Fig. 4 zur Dichtung 7 schräg verlaufend ausgebildet wird, wobei der Winkel α bei deren Einschieben unverändert bleibt. Wesentlich ist, dass der Dichtung 7 keine zu dieser parallele Kante geboten wird, an der diese bei der Montage zurückgehalten und beschädigt werden kann.

### Bezugszeichenliste

- 1: Betätigungszylinder
- 2: Gehäuse
- 3: Kolbeneinheit
- 4: Führungshülse
- 5: Druckbolzen
- 6: Übertragungsglied
- 7: Dichtung
- 7a: Basisbereich
- 7b, c: Dichtlippen
- 8: Zylinderbohrung
- 9, 9a: Fenster
- 10: Schnapphaken
- 11: Anlagefläche
- 12: Manschette
- 13: Mantellinie
- 14, 14a: Fensteraustrittswandungsabschnitt
- 15: Fenstereintrittswandungsabschnitt
- 16, 17: Kante
- 20: Boden
- 19: Stufenbohrung
- 25: innerer Radius
- α: Winkel
- T: Tangente
- U: Umfangsrichtung

## Patentansprüche

1. Betätigungszylinder (1), insbesondere für eine hydraulische Kupplungsbetätigung in Kraftfahrzeugen, umfassend ein einseitig, durch einen Boden (20) geschlossenes zylinderrohrförmiges Gehäuse (2), welches an deren Zylinderfläche mindestens ein Fenster (9, 9a) aufweist und wobei an einem Einbauort axial zwischen dem Fenster (9, 9a) und dem Boden (20) eine Dichtung (7) zur Anlage an der Innenumfangsfläche des Gehäuses (2) vorgesehen ist,
**dadurch gekennzeichnet,**
**dass** einer Umfangsposition der Dichtung (7) beim Passieren des Fensters (9, 9a) ein Fensteraustrittswandungsabschnitt (14a) zugeordnet ist, welcher mit der Dichtung (7) einen Winkel (α) einschließt, wodurch diese bei deren Montage das Fenster (9, 9a) beschädigungsfrei passieren kann.
